(19) **Europäisches Patentamt / European Patent Office / Office européen des brevets**

(11) **EP 2 951 903 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **14701106.8**

(22) Anmeldetag: **22.01.2014**

(51) Int Cl.:
*H02M 3/04* (2006.01)   *H02J 1/10* (2006.01)
*H02M 7/42* (2006.01)   *H02J 3/38* (2006.01)

(86) Internationale Anmeldenummer:
**PCT/EP2014/051241**

(87) Internationale Veröffentlichungsnummer:
**WO 2014/118059 (07.08.2014 Gazette 2014/32)**

(54) **VERFAHREN UND WECHSELRICHTER ZUR LEISTUNGSVERTEILUNG ÜBER MEHRERE, GEMEINSAM AN EINEN GLEICHSPANNUNGSEINGANG EINES DC/AC-WANDLERS ANGESCHLOSSENE GLEICHSTROMQUELLEN**

METHOD AND INVERTER FOR POWER DISTRIBUTION OVER MULTIPLE DIRECT CURRENT SOURCES WHICH ARE CONNECTED JOINTLY TO A DIRECT VOLTAGE INPUT OF A DC/AC TRANSFORMER

PROCÉDÉ ET ONDULEUR POUR DISTRIBUER LA PUISSANCE PAR L'INTERMÉDIAIRE DE PLUSIEURS SOURCES DE COURANT CONTINU CONNECTÉES COLLECTIVEMENT À UNE ENTRÉE DE TENSION CONTINUE D'UN CONVERTISSEUR CC/CA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2013 DE 102013100961**
**24.05.2013 DE 102013105339**

(43) Veröffentlichungstag der Anmeldung:
**09.12.2015 Patentblatt 2015/50**

(73) Patentinhaber: **SMA Solar Technology AG**
**34266 Niestetal (DE)**

(72) Erfinder:
• **UNRU, Alexander**
**34266 Niestetal (DE)**
• **SCHRÖDER, Thomas**
**34117 Kassel (DE)**

(74) Vertreter: **Lahnor, Peter et al**
**SMA Solar Technology AG**
**Corporate Intellectual Property Management**
**Sonnenallee 1**
**34266 Niestetal (DE)**

(56) Entgegenhaltungen:
EP-A1- 2 528 181       DE-A1- 10 044 096
DE-A1-102009 032 288   US-A1- 2010 133 904
US-A1- 2013 002 031

**Beschreibung**

## TECHNISCHES GEBIET DER ERFINDUNG

Die Erfindung bezieht sich auf ein Verfahren zur Leistungsverteilung über mehrere, parallel an einen eingangsseitigen Gleichspannungszwischenkreis eines DC/AC-Wandlers angeschlossene Gleichstromquellen, das die Merkmale des Oberbegriffs des unabhängigen Patentanspruchs 1 aufweist. Weiterhin bezieht sich die Erfindung auf einen Wechselrichter, der einen DC/AC-Wandler mit einem eingangsseitigen Gleichspannungszwischenkreis, mehrere Eingänge für einen parallelen Anschluss von mehreren Gleichstromquellen an den Gleichspannungszwischenkreis und mindestens einen DC/DC-Wandler aufweist, der zwischen einem der mehreren Eingänge und dem Gleichspannungszwischenkreis angeordnet und auf eine Veränderung der über ihn in den Gleichspannungszwischenkreis eingespeisten Leistung ansteuerbar ist.

Insbesondere können einzelne, mehrere oder alle der Gleichstromquellen einen Photovoltaikgenerator mit mindestens einem String von Photovoltaikzellen umfassen. Wenn alle Gleichstromquellen so ausgebildet sind, wird ein entsprechender Wechselrichter auch als Photovoltaikwechselrichter bezeichnet. Wenn zudem der Betriebspunkt aller Gleichstromquellen durch Ansteuern entsprechender DC/DC-Wandler einzeln eingestellt werden kann, spricht man von einem Multistring-Wechselrichter. Unter einem String von Photovoltaikzellen wird hier zumindest eine Reihenschaltung einer Vielzahl von Photovoltaikzellen verstanden. In einem String können aber auch mehrere solcher Reihenschaltungen parallel geschaltet sein. Dann wird jede dieser parallel geschalteten Reihenschaltungen als Substring bezeichnet. Die Photovoltaikzellen können dabei in Gruppen zu Photovoltaikmodulen zusammengefasst sein, die dann ihrerseits zu einem String oder Substring in Reihe geschaltet sind.

Die Abregelung der Leistung von Wechselrichtern, mit denen photovoltaisch erzeugte elektrische Energie in ein Wechselstromnetz eingespeist wird, kann zur Stabilisierung des Wechselstromnetzes erforderlich sein. Die Abregelung kann auf einen festen, d. h. für einen gewissen Zeitraum zeitlich konstanten Prozentsatz der Nennleistung des jeweiligen Wechselrichters erfolgen. Sie kann aber auch dynamisch, d. h. unter Berücksichtigung einer auf den momentanen Leistungsbedarf in dem Wechselstromnetz ausgerichteten Vorgabe auf Basis von zeitlich variierenden Grenzwerten erfolgen. In jedem Fall stellt die Abregelung negative Regelleistung für das Wechselstromnetz bereit.

Unabhängig davon, ob die Abregelung dynamisch oder eher statisch erfolgt und aus welchem Grund sie vorgenommen wird, beschäftigt sich die vorliegende Erfindung damit, die abgeregelte Leistung des DC/AC-Wandlers auf die verschiedenen DC/DC-Wandler des Wechselrichters zu verteilen.

## STAND DER TECHNIK

Ein bekannter Multistring-Wechselrichter ist das Produkt "Sunny TriPower" der Anmelderin. Die mehreren DC/DC-Wandler eines Multistring-Wechselrichters ermöglichen es, die über sie angeschlossenen Strings jeweils unabhängig voneinander in ihrem Betriebspunkt maximaler Leistung (Maximum Power Point = MPP) zu betreiben, d. h. bei der Betriebsspannung, bei der die maximale elektrische Leistung von den Strings generiert wird. Dabei sind die DC/DC-Wandler typischerweise Hochsetzsteller, die die Betriebsspannung der einzelnen Strings auf die Zwischenkreisspannung eines gemeinsamen Gleichspannungszwischenkreises, der ein Eingangszwischenkreis des DC/AC-Wandlers ist, hochsetzen. Bei dem Produkt "Sunny TriPower" erfolgt die Abregelung der Leistung eines Strings stets in Richtung seiner Leerlaufspannung. Hier wird im Fall einer Abregelung der Leistung des DC/AC-Wandlers zuerst der String mit der höchsten Spannungsdifferenz zwischen seiner Betriebsspannung und der Zwischenkreisspannung entlastet, so dass sich seine Betriebsspannung in Richtung seiner Leerlaufspannung erhöht. Erst wenn dieser String vollständig entlastet ist oder wenn die Spannungsdifferenz gleich der Spannungsdifferenz bei einem zweiten String ist, wird auch der zweite String entlastet. Hierdurch wird eine Minimierung der Verlustleistung in den einzelnen als Hochsetzsteller ausgeführten DC/DC-Wandlern, wie auch eine Angleichung ihrer Verlustleistung untereinander erreicht. Wie bereits erläutert, erfolgt die Verschiebung der Betriebsspannung bei Wechselrichtern dieses Typs stets in Richtung der Leerlaufspannung der einzelnen Strings. Daher muss bei der Anlagendimensionierung sichergestellt werden, dass die maximale Leerlaufspannung der Strings die maximal erlaubte Zwischenkreisspannung nicht überschreitet.

Bei einer bekannten Version des Multistring-Wechselrichters "Sunnyboy" der Anmelderin wird dem Anlagenbetreiber die Möglichkeit gegeben, den Bereich der möglichen Betriebsspannungen der Strings zu erweitern. Damit die Zwischenkreisspannung dennoch ihren maximal erlaubten Wert nicht überschreitet, wird bei einer Abregelung der Leistung des DC/AC-Wandlers die Betriebsspannung in Richtung eines Kurzschlusses des jeweiligen Strings, d. h. vom MPP aus zu niedrigeren Spannungen hin verschoben. Dies ermöglicht es, die Strings so auszulegen, dass die maximale MPP-Spannung annähernd gleich der maximalen erlaubten Zwischenkreisspannung ist. Konkret wird bei der Steuerung dieses bekannten Multistring-Wechselrichters noch vor dem Zuschalten der Strings zu einem gemeinsamen Zwischenkreis erfasst, ob ein spannungserweiternder String, d. h. ein String mit Leerlaufspannung über der maximal zulässigen Zwischenkreisspannung, vorliegt. Das Anfahren des MPP's eines solchen Strings erfolgt dann aus dem Bereich niedriger Betriebsspannungen des Strings heraus; und beim Abregeln der Leistung des DC/AC-Wandlers wird ein solcher String mit reduzierten Betriebsspannungen betrieben. Andere Strings, die nicht spannungserweiternd sind, werden hingegen beim Abregeln zu höheren Betriebsspannungen hin, d. h. zu ihrer Leerlaufspannung hin, verschoben, weil in dieser Richtung aufgrund des Verlaufs der Kennlinien der Strings eine bessere, insbesondere schnellere Regelbarkeit deren Leistung gegeben ist. Wenn ein zunächst nicht spannungserweiternder String aufgrund veränderter Betriebsbedingungen doch spannungserweiternd wird, d. h. zum Beispiel beim Abregeln seiner Leistung durch Erhöhung seiner Betriebsspannung in Richtung seiner Leerlaufspannung eine Betriebsspannung oberhalb der zulässigen Zwischenkreisspannung erreicht, wird die Betriebsspannung des betroffenen Strings und eventuell parallel an diesen angeschlossener und mit demselben DC/DC-Wandler verbundener Substrings kurzgeschlossen, wodurch ein weiteres Ansteigen der Zwischenkreisspannung verhindert wird. Anschließend muss die von dem Multistring-Wechselrichter eingespeiste Leistung neu angefahren werden. Hierdurch ergeben sich Verluste bei der Einspeisung, da beim erneuten Anfahren aufgrund einer maximalen Steigung der Leistungsrampe die aktuell zulässige Leistung des DC/AC-Wandlers erst nach einigen Sekunden wieder eingespeist werden kann. Generell ist es von Interesse, die Leistung, die aktuell mit dem DC/AC-Wandler eingespeist werden darf, möglichst voll auszuschöpfen.

Aus der US 2011/0101784 A1 ist ein hybrider Wind- und Solarwechselrichter bekannt. Dabei wird Leistung von alternativen Spannungsquellen einem elektrischen Netz zugeführt. Je nach Nachfrage nach elektrischer Leistung in dem Netz wird die elektrische Leistung von den einzelnen Spannungsquellen dem Netz zugeschaltet oder zwischengespeichert.

Aus der EP 2 284 382 A2 ist ein Energieversorgungssystem bekannt, bei dem elektrische Energie, die von verschiedenen Spannungsquellen auf einem Leistungsbus bereitgestellt wird, lokal verbraucht oder in Form von Wärme zwischengespeichert wird.

Aus der EP 2 104 200 A1 ist ein Verfahren zur Ansteuerung eines Multistring-Wechselrichters für Photovoltaikanlagen bekannt, der für jeden String eingangsseitig einen separaten DC/DC-Wandler aufweist. Zur Wirkungsgradverbesserung werden an jedem DC/DC-Wandler eine oder mehrere elektrische Größen, und zwar Eingangsstrom, Eingangsspannung und/oder Eingangsleistung gemessen, und in Abhängigkeit von dieser Messung ändert zumindest einer der DC/DC-Wandler beim Überschreiten eines Grenzwerts und/oder Fensters seinen Betriebszustand derart, dass seine Verlustleistung gesenkt wird. Zum Beispiel kann der DC/DC-Wandler abgeschaltet werden, wenn ein mit ihm bewegtes Hochsetzen der Betriebsspannung des an ihn angeschlossenen Strings nicht mehr erforderlich ist, weil die Betriebsspannung die Zwischenkreisspannung erreicht.

Aus der WO 2012/017068 A2 ist ein Verfahren zur Erfassung einer in einem Zeitraum potentiell möglich gewesenen, aber tatsächlich nicht eingespeisten Einspeiseenergiemenge einer Photovoltaikanlage bekannt, die einen oder mehrere Wechselrichter zur Einspeisung elektrischer Energie von einem oder mehreren Photovoltaikgeneratoren in ein Wechselstromnetz aufweist. Dieses Verfahren ist insbesondere zum Erfassen der potentiell möglich gewesenen Einspeiseleistung während einer Abregelung vorgesehen. Um diese Erfassung zu ermöglichen, wird der oder werden die Wechselrichter während der Abregelung unterschiedlich betrieben, wobei die unterschiedlichen Betriebsweisen einen Betrieb im MPP oder zumindest zur Erfassung der Kennlinie der an den jeweiligen Wechselrichter angeschlossenen Strings umfassen. Konkret kann einer von mehreren Wechselrichtern jeweils im MPP betrieben werden, und die Leistung der anderen Wechselrichter kann zum Erreichen der gewünschten Abregelung stärker reduziert werden, als wenn die Abregelung gleichmäßig auf alle Wechselrichter verteilt würde. In einer anderen konkreten Ausführungsform des bekannten Verfahrens wird die Kennlinie des oder der an den Wechselrichter angeschlossenen Strings bereichsweise oder vollständig abgetastet, und die dadurch variierende Leistung des Wechselrichters wird gepuffert oder zu anderen Zeiten ausgeglichen, so dass die geforderte Leistungsreduzierung im zeitlichen Mittel erreicht wird. Die Anforderungen an die Abregelung elektrischer Leistung und insbesondere an die Bereitstellung von negativer Regelleistung lassen jedoch auch kein kurzfristiges Überschreiten mit der von einem Wechselrichter bereitgestellten elektrischen Leistung zu. Um trotz der variablen elektrischen Leistung des Wechselrichters eine konstante elektrische Leistung einzuspeisen, schlägt die WO 2012/017068 A2 vor, die Differenz zwischen der unterschiedlichen elektrischen Leistung und der konstanten elektrischen Leistung zwischenzuspeichern oder in andere Energieformen umzuwandeln. Hierfür sind dann aber zusätzliche Einrichtungen erforderlich.

Aus der DE 100 44 096 A1 ist ein Inselnetz offenbart, bei dem durch regelbare Windenergieerzeuger, die die erzeugte Leistung auf die im Inselnetz verbrauchte Leistung regeln, auf Schutzlasten verzichtet werden kann. Weiterhin offenbart die US 2010/0133904 A1 einen Wechselrichter, bei dem die Zwischenkreisspannung in Abhängigkeit der Ausgangsleitung des Wechselrichters geregelt wird.

## AUFGABE DER ERFINDUNG

Der Erfindung liegt die Aufgabe zugrunde, ein Verfahren zur Steuerung eines Wechselrichters aufzuzeigen, das die Ausnutzung der maximal einspeisbaren Leistung ohne zusätzlichen apparativen Aufwand erleichtert und im abgeregelten Zustand einen effizienten und zuverlässigen Betrieb des Wechselrichters auch unter schwankenden Eingangsleistungen von an dem Wechselrichter angeschlossenen Gleichstromquellen ermöglicht.

**LÖSUNG**

Die Aufgabe der Erfindung wird durch ein Verfahren mit den Merkmalen des unabhängigen Patentanspruchs 1 und durch einen Wechselrichter mit den Merkmalen des nebengeordneten Patentanspruchs 17 gelöst. Die abhängigen Patentansprüche 2 bis 16 betreffen bevorzugte Ausführungsformen des erfindungsgemäßen Verfahrens, die abhängigen Patentansprüche 18 bis 20 bevorzugte Ausführungsformen des erfindungsgemäßen Wechselrichters.

**BESCHREIBUNG DER ERFINDUNG**

Die Erfindung stellt ein Verfahren zur Leistungsverteilung über mehrere, parallel an einen eingangsseitigen Gleichspannungszwischenkreis eines DC/AC-Wandlers angeschlossenen Gleichstromquellen bereit. Mindestens eine der Gleichstromquellen ist über einen DC/DC-Wandler an den Gleichspannungszwischenkreis angeschlossen, wobei der DC/DC-Wandler auf eine Veränderung der von der Gleichstromquelle in den Gleichspannungszwischenkreis eingespeisten Leistung ansteuerbar ist. In einem abgeregelten Betrieb des DC/AC-Wandlers, in dem die Leistung des DC/AC-Wandlers gegenüber der Summe der von allen Gleichstromquellen maximal verfügbaren Leistungen abgeregelt wird, werden die Leistungen der Gleichstromquellen unterschiedlich abgeregelt, und durch Ansteuern zumindest des mindestens einen DC/DC-Wandlers, über den die mindestens eine Gleichstromquelle an den Gleichspannungszwischenkreis angeschlossen ist, wird eine Variation der Leistung mindestens einer anderen Gleichstromquelle dynamisch kompensiert.

Wieso die Variation der Leistung der mindestens einen anderen Gleichstromquelle auftritt, ist grundsätzlich unerheblich, wenn auch bevorzugte Ausführungsformen der vorliegenden Erfindung solche Variationen aktiv hervorrufen. Dass die Variation dynamisch kompensiert wird, bedeutet, dass durch Ansteuern des mindestens einen DC/DC-Wandlers die von der mindestens einen Gleichstromquelle in den Gleichspannungszwischenkreis eingespeiste Leistung soweit erhöht oder erniedrigt wird, dass die in der Summe von der mindestens einen Gleichstromquelle und der mindestens einen anderen Gleichstromquelle in den Gleichspannungszwischenkreis eingespeiste Leistung ohne ein Zwischenspeichern von Leistung, das über die Effekte eines üblichen Zwischenkreiskondensators hinausgeht, einer externen Vorgabe folgt und dazu beispielsweise konstant ist. Dies ist gleichbedeutend damit, dass jede Leistungszunahme einzelner Gleichstromquellen durch eine entsprechende Leistungsabnahme der verbleibenden Gleichstromquellen ausgeglichen wird. Mit der zeitlichen Leistungs-änderungen $\partial P_i/\partial t$ einer einzelnen Gleichstromquelle ergibt sich somit eine Bilanzierungsgleichung der Form:

$$\sum_{i=1}^{n} \partial P_i/\partial t = 0 \,,$$

wobei die Summe über die Anzahl n aller Gleichstromquellen des Wechselrichters läuft. Diese Bilanzierungsgleichung gilt insbesondere auf einer engen Zeitskala, so dass ein Ripple der Zwischenkreisspannung möglichst klein gehalten wird. Hierbei wird das Ripple der Zwischenkreisspannung umso geringer, je geringer die Antwortzeit der verbleibenden Gleichstromquellen bzw. der DC/DC-Wandler, über die sie ihre Leistungen in den Gleichspannungszwischenkreis einspeisen, auf die Leistungsänderung einer bestimmten Gleichstromquelle ist.

Damit wird die Voraussetzung dafür geschaffen, dass die in den gemeinsamen Zwischenkreis eingespeiste Leistung immer der Leistung entspricht, die aktuell maximal über den DC/AC-Wandler fließen darf, insbesondere in ein Wechselstromnetz, das mit Hilfe der Abregelung des DC/AC-Wandlers stabilisiert werden soll. Dabei kann die Leistung, auf die der DC/AC-Wandler abgeregelt wird, ihrerseits dynamisch variabel sein. So kann durch das erfindungsgemäße Verfahren trotz der Variation der Leistung der mindestens einen anderen Gleichstromquelle auch Regelleistung mit dem Wechselrichter bereitgestellt werden.

Vorzugsweise weist die mindestens eine Gleichstromquelle einen Photovoltaikgenerator auf, der über den ansteuerbaren DC/DC-Wandler an den Gleichspannungszwischenkreis des DC/AC-Wandlers angeschlossen ist. Ein Photovoltaikgenerator kann durch Verschieben seines Betriebspunkts mit dem DC/DC-Wandler sehr schnell in seiner Leistung variiert werden. Damit ist eine sehr hohe Dynamik beim Kompensieren der Variation der Leistung der mindestens einen anderen Gleichstromquelle möglich. Insbesondere ist diese Dynamik viel größer als beispielsweise bei einem Generator mit einer elektrischen Maschine als Gleichstromquelle, bei dem schon das Trägheitsmoment eines Rotors der elektrischen Maschine einer höheren Dynamik beim Verändern der Abgegebenen Leistung entgegen steht.

Für eine große dynamische Leistung ist es vorteilhaft, wenn mehrere Gleichstromquellen jeweils einen Photovoltaikgenerator aufweisen, der über einen ansteuerbaren DC/DC-Wandler an den Gleichspannungszwischenkreis des DC/AC-Wandlers angeschlossen ist, mit dem auch ein MPP-Tracking für den jeweiligen Photovoltaikgenerator möglich ist. Der Wechselrichter bei dem erfindungsgemäßen Verfahren kann auch ein Multistring-Wechselrichter sein, bei dem alle Gleichstromquellen jeweils mindestens ein String von Photovoltaikzellen aufweisen und jeweils, oder doch zumindest bis auf eine, über einen ansteuerbaren eingangsseitigen DC/DC-Wandler an den gemeinsamen DC/AC-Wandler angeschlossen sind. Der Betriebspunkt einer direkt oder über einen DC/DC-Wandler mit festem Übersetzungsverhältnis an den Gleichspannungszwischenkreis angeschlossenen Gleichstromquelle kann durch Verändern der Zwischenkreisspannung mit dem DC/AC-Wandler des Wechselrichters variiert werden.

Die mindestens eine andere Gleichstromquelle, deren Leistungsvariation durch Ansteuern des der mindestens einen Gleichstromquelle zugeordneten DC/DC-Wandlers kompensiert wird, kann jedoch auch einen Generator mit einer elektrischen Maschine aufweisen. Dieser Generator kann ohne einen DC/DC-Wandler, der auf eine Veränderung der von der mindestens einen anderen Gleichstromquelle in den Gleichspannungszwischenkreis eingespeisten Leistung ansteuerbar ist, an den Gleichspannungszwischenkreis des DC/AC-Wandlers angeschlossen sein. Wenn der Generator ein Wechselstromgenerator ist, ist dieser in der Gleichstromquelle mit einem nachgeschalteten AC/DC-Wandler kombiniert. Konkret kann es sich bei der mindestens einen anderen Gleichstromquelle z. B. um eine Windkraftanlage oder einen Dieselgenerator handeln, die selbst nur eine geringe Dynamik, der mit ihnen bereitstellbaren Leistung aufweisen. Durch Verknüpfung mit der mindestens einen hochdynamischen Gleichstromquelle auf Basis eines Photovoltaikgenerators wird dieses Manko jedoch bei dem erfindungsgemäßen Verfahren beseitigt.

Es versteht sich, dass die von jeder Gleichstromquelle abgegebene Leistung bei dem erfindungsgemäßen Verfahren erfasst wird, um die Leistungskompensation zwischen den Gleichstromquellen durchführen zu können. Es versteht sich weiterhin, dass die Leistung der Gleichstromquellen mit mindestens derselben Rate erfasst wird, mit der mit Hilfe des mindestens einen DC/DC-Wandlers auf die Variationen der Leistung des mindestens einen anderen Gleichstromquelle reagiert wird. Vorzugsweise ist die Tastrate, mit der die Leistung der Gleichstromquellen erfasst wird, noch deutlich höher, beispielsweise doppelt so groß. Die Tastrate oder Messfrequenz kann mehr als 100, mehr als 1.000 oder auch mehr als 10.000 Hz betragen. Eine typische Rate mit der die Leistung der Gleichstromquellen erfasst wird, liegt im Bereich von 8 bis 50 kHz. Die Rate, mit der die Leistung der mindestens einen Gleichstromquelle durch Ansteuern des mindestens einen DC/DC-Wandlers nachgestellt wird, um auf Variationen der Leistung der mindestens einen anderen Gleichstromquelle zu reagieren, liegt demgegenüber bei mehr als 10 Hz, vorzugsweise mehr als 100 Hz oder bei mindestens 1000 Hz. Konkret liegt sie derzeit in einem Bereich von 4 bis 25 kHz. Dies entspricht einer Antwortzeit des mindestens einen DC/DC-Wandlers auf Variationen der Leistung der mindestens einen anderen Gleichstromquelle von 40 bis 250 µs. Selbst eine Rate von mehr als 10 Hz entsprich bereits einer Antwortzeit von weniger als 100 ms, und damit weniger als der halben üblicherweise erlaubten Umsetzungszeit eines an ein Wechselstromnetz angeschlossenen Wechselrichters auf eine sprunghafte Reduktion der AC-Leistung von 200 ms. Generell ist festzustellen, dass die Güte und Robustheit des erfindungsgemäßen Verfahrens mit zunehmender Messfrequenz und mit abnehmender Antwortzeit des mindestens einen DC/DC-Wandlers auf Variationen der Leistung der mindestens einen anderen Gleichstromquelle zunimmt.

Die Leistung des DC/AC-Wandlers wird typischerweise nach externen Vorgaben abgeregelt, wobei diese Vorgaben vom jeweiligen Betreiber des Netzes, in das der DC/AC-Wandler einspeist, explizit oder durch Parameter des Netzes vorgegeben werden können. Die Verteilung der Leistung auf die einzelnen Gleichstromquellen erfolgt dann dynamisch innerhalb des erfindungsgemäßen Verfahrens, d. h. nach internen Vorgaben.

Bei dem erfindungsgemäßen Verfahren kann die Variation der Leistung der mindestens einen anderen Gleichstromquelle durch Variationen der Betriebsbedingungen der anderen Gleichstromquelle, wie beispielsweise eines Photovoltaikgenerators oder einer Windkraftanlage begründet sein. In verschiedenen Ausführungsformen des erfindungsgemäßen Verfahrens wird die Leistung der mindestens einen anderen Gleichstromquelle jedoch bewusst, d. h. aktiv variiert, um die Zeit der Abregelung der Leistung des DC/AC-Wandlers gezielt zu nutzen.

Hierzu zählt es insbesondere, dass mindestens ein Teil der Kennlinie der Gleichstromquellen, d. h. bei einem Multistring-Wechselrichter aller über jeweils einen DC/DC-Wandler bzw. aller direkt an den Gleichspannungszwischenkreis angeschlossenen Strings erfasst wird, um deren MPP auch im abgeregelten Betrieb zu erfassen. Dabei kann das Ziel dieser Erfassung die Ermittlung der aktuellen maximal verfügbaren Leistung sein, um hierfür eine Vergütung zu verlangen. Das Ziel kann aber auch sein, den jeweiligen MPP direkt im Anschluss an die Abregelung anfahren zu können. Auch darin ist eine Maßnahme zu sehen, die Einspeiseleistung zu maximieren, hier im direkten Anschluss an die Abregelung.

Zur Erfassung des MPP einer Gleichstromquelle wird dieser vorzugsweise direkt angefahren. Zu seinem Auffinden ist es sinnvoll, die Kennlinie der jeweiligen Gleichstromquelle möglichst vollständig abzufahren. Die dabei auftretende Variation der Leistung der jeweiligen Gleichstromquelle wird erfindungsgemäß durch geeignetes Ansteuern des mindestens einen DC/DC-Wandlers dynamisch kompensiert.

Durch das Abfahren der Kennlinie während einer Abregelung kann auch erkannt werden, welche der an den Gleichspannungszwischenkreis angeschlossenen Gleichstromquellen spannungserweiternd sind, d. h. eine aktuelle Leerlaufspannung oberhalb der maximal zulässigen Zwischenkreisspannung aufweisen. Die Betriebsspannung dieser Gleichstromquellen sollte bei einer Abregelung in Kurzschlussrichtung statt in Leerlaufrichtung variiert werden, um ein Überschreiten der maximal zulässigen Zwischenkreisspannung zu vermeiden. Dies gilt insbesondere bei einem Multistring-Wechselrichter.

Das erfindungsgemäße Verfahren erlaubt aber nicht nur die Erkennung von spannungserweiternden Gleichstromquellen, sondern erlaubt es auch, diese aus einem leerlaufnahen Betriebszustand in einen kurzschlussnahen Betriebszustand zu überführen, ohne sie kurzschließen zu müssen. Die dabei zwischenzeitlich in den gemeinsamen Gleichspannungszwischenkreis fließende höhere Leistung wird mit dem mindestens einen DC/DC-Wandler dynamisch kompensiert.

Die Variation der Leistung der mindestens einen anderen Gleichstromquelle kann auch unter dem Gesichtspunkt erfolgen, einen Betriebspunkt für alle DC/DC-Wandler zu finden, in dem eine Optimierung des Betriebs des Wechselrichters unter einem übergeordneten Gesichtspunkt gegeben ist. Ein solcher übergeordneter Gesichtspunkt kann z. B. eine minimierte Verlustleistung in dem gesamten Wechselrichter oder auch nur allen DC/DC-Wandlern sein. Auch eine Angleichung der Verlustleistung einzelner DC/DC-Wandler untereinander kann ein solcher übergeordneter Gesichtspunkt sein. Ein weiterer Gesichtspunkt wäre eine minimierte Beanspruchung der Komponenten der DC/DC-Wandler und/oder des DC/AC-Wandlers oder auch eine optimierte Regelbarkeit der Leistung des DC/AC-Wandlers, um die jeweils geltende Obergrenze der Leistung des DC/AC-Wandlers maximal auszuschöpfen.

Wie schon angedeutet wurde, ist ein erfindungsgemäßer Wechselrichter mit einem einen eingangsseitigen Gleichspannungszwischenkreis aufweisenden DC/AC-Wandler, mit mehreren Eingängen für einen parallelen Anschluss von mehreren Gleichstromquellen an den Gleichspannungszwischenkreis, mit mindestens einem, zwischen einem der Eingänge und dem Gleichspannungszwischenkreis angeordneten DC/DC-Wandler, der auf eine Veränderung der über ihn in den Gleichspannungszwischenkreis eingespeisten Leistung ansteuerbar ist, und mit einer Steuereinrichtung dadurch gekennzeichnet, dass seine Steuereinrichtung den mindestens einen DC/DC-Wandler gemäß dem erfindungsgemäßen Verfahren ansteuert. Dabei kann die Steuereinrichtung eine primäre Steuereinrichtung umfassen, die die Leistung des DC/AC-Wandlers nach externen Vorgaben regelt, und eine sekundäre Steuereinrichtung, die diese Leistung unter Ansteuerung des mindestens einen DC/DC-Wandlers dynamisch auf die einzelnen Eingänge für die Gleichstromquellen verteilt. Dazu können in allen Eingängen ansteuerbare DC/DC-Wandler vorgesehen sind. Bei einem der Eingänge kann aber auf einen ansteuerbaren DC/DC-Wandler verzichtet werden, da die Zwischenkreisspannung mit dem DC/AC-Wandler variiert werden kann, um den Betriebspunkt der an diesen Eingang angeschlossenen Gleichstromquelle zu variieren. Dabei kann der Verzicht auf einen ansteuerbaren DC/DC-Wandler sowohl bedeuten, dass überhaupt kein DC/DC-Wandler vorgesehen ist, als auch, dass ein DC/DC-Wandler mit einem festen Übersetzungsverhältnis vorgesehen ist.

In einem Betriebsmodus ohne Abregelung der Leistung des DC/AC-Wandlers kann die Steuereinrichtung die DC/DC-Wandler und ggf. den DC/AC-Wandler zu einem individuellen MPP-Tracking der angeschlossenen Gleichstromquellen ansteuern. Dies gilt insbesondere bei Ausbildung einzelner, mehrere oder aller Gleichstromquellen als Photovoltaikgeneratoren und ganz besonders bei einem erfindungsgemäßen Multistring-Wechselrichter,

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der dargestellten relativen Anordnung und Wirkverbindung mehrerer Bauteile zueinander - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Die Erfindung wird im Folgenden anhand von Ausführungsbeispielen unter Bezugnahme auf die beigefügten Zeichnungen näher erläutert und beschrieben.

**Fig. 1**    ist ein vereinfachter Schaltplan einer ersten Ausführungsform des erfindungsgemäßen Wechselrichters.

Fig. 2    ist eine Auftragung der Leistung über der Zeit von zwei DC/DC-Wandlern eines Wechselrichters bei konstanter Leistung eines gemeinsamen DC/AC-Wandlers des Wechselrichters.

Fig. 3    ist eine Auftragung der Leistung über der Zeit von drei DC/DC-Wandlern eines Wechselrichters gemäß Fig. 1, wobei die Kennlinie der an einen der beiden DC/DC-Wandler angeschlossenen Strings abgefahren wird, was mit einem anderen der DC/DC-Wandler kompensiert wird.

Fig. 4    ist eine Auftragung der Leistung über der Zeit von drei DC/DC-Wandlern eines Wechselrichters gemäß Fig. 1, wobei die Kennlinie der an einen der beiden DC/DC-Wandler angeschlossenen Strings abgefahren wird, was mit beiden anderen DC/DC-Wandlern kompensiert wird; und

Fig. 5    ist ein vereinfachter Schaltplan einer weiteren Ausführungsform des erfindungsgemäßen Wechselrichters.

**FIGURENBESCHREIBUNG**

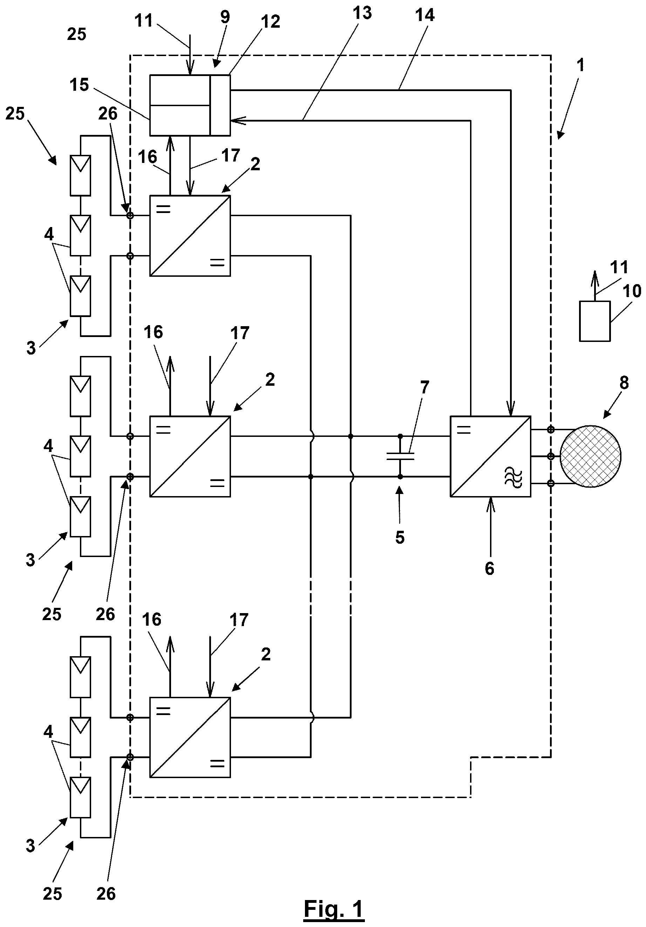

**Fig. 1** zeigt den prinzipiellen Aufbau eines Wechselrichters 1. Der Wechselrichter 1 umfasst mehrere zweipolige Eingänge 26 an die jeweils ein DC/DC-Wandler 2, typischerweise ein Hochsetzsteller, angeschlossen ist. Über jeden der Eingänge 26 ist eine Gleichstromquelle 25 an einen gemeinsamen Gleichspannungszwischenkreis 5 angeschlossen. Jede Gleichstromquelle 25 weist mindestens einen String 3 von Photovoltaikzellen 4 auf. Der Gleichspannungszwischenkreis 5 ist der Eingangszwischenkreis eines gemeinsamen DC/AC-Wandlers 6. Die Zahl der Photovoltaikzellen 4 jedes Strings 3 kann sehr viel größer sein als hier dargestellt. Jeder String 3 kann auch mehrere parallel geschaltete Substrings aufweisen. Die Zahl der Eingänge 26 kann ebenfalls größer sein als hier dargestellt. Es können aber auch nur zwei Eingänge 26 vorhanden sein. Die DC/DC-Wandler 2 sind typischerweise Hochsetzsteller, mit denen trotz einheitlicher Zwischenkreisspannung über einem Zwischenkreiskondensator 7 in dem Gleichspannungszwischenkreis 5 jeder String 3 bei einer individuellen Betriebsspannung betrieben werden kann, um die unter den aktuellen Betriebsbedingungen maximale elektrische Leistung von dem String 3 zu erhalten. Diese elektrische Leistung wird dem DC/AC-Wandler 6 über den Gleichspannungszwischenkreis 5 bereitgestellt, und er speist sie als Wechselstrom in ein externes Wechselstromnetz 8 ein. Der DC/AC-Wandler 6 und die DC/DC-Wandler 2 werden von einer Steuereinrichtung 9 gesteuert. Wenn ein Betreiber 10 des Wechselstromnetzes 8 ein Abregelungssignal 11 aussendet, das von der Steuereinrichtung 9 empfangen wird, regelt die Steuereinrichtung 9 mit einer Teilsteuereinrichtung 12 den DC/AC-Wandler 6 entsprechend ab. Dabei empfängt sie ein die aktuelle Leistung des DC/AC-Wandlers 6 beschreibendes Leistungssignal 13 und sendet ein Ansteuersignal 14 an den DC/AC-Wandler 6. Es versteht sich, dass die Signale 13 und 14 aus verschiedenen Teilsignalen - beispielsweise aus einer Strom- und einer Spannungsmessung bei dem Signal 13 bzw. aus mehreren Ansteuersignalen für die einzelnen HL-Schalter des DC/AC-Wandlers 6 im Falle des Signals 14 - zusammengesetzt sein können. Über eine weitere Teilsteuereinrichtung 15 verteilt die Steuereinrichtung 9 die abgeregelte Leistung auf die einzelnen DC/DC-Wandler 2 und empfängt auch hierbei Leistungssignale 16 und gibt Ansteuersignale 17 aus. Dabei werden die Ansteuersignale 17 in Abhängigkeit von den Leistungssignalen 16 so generiert, dass die Summe der Leistungen der DC/DC-Wandler 2, die in den Gleichspannungszwischenkreis 5 fließen, der von dem DC/AC-Wandler 6 in das Wechselstromnetz 8 eingespeisten abgeregelten Leistung entspricht. Variationen bei der Leistung eines der DC/DC-Wandler 2 werden durch gegenläufige Variationen der Leistungen mindestens eines anderen DC/DC-Wandlers 2 ausgeglichen, so dass immer die abgeregelte Leistung des DC/AC-Wandlers 6 in dem Zwischenkreis 5 zur Verfügung steht und damit die maximal zulässige Leistung in das Wechselstromnetz 8 eingespeist werden kann. Dies gilt sowohl bei Abregelung der Leistung des DC/AC-Wandlers 6 auf einen festen Wert, wie beispielsweise einen bestimmten Prozentsatz der Nennleistung des DC/AC-Wandlers 6, als auch bei Abregelung auf zeitlich variierende Grenzwerte, die auf Basis des momentanen Leistungsbedarfs des Wechselstromnetzes 8 ermittelt werden. Hierbei entspricht insbesondere der letzte Fall einer Bereitstellung von Regelleistung mit Hilfe des DC/AC-Wandlers 6 für das Wechselstromnetz 8, d. h. einer dynamischen Variation der von dem DC/AC-Wandler 6 in das Wechselstromnetz 8 eingespeisten Leistung nach externen Vorgaben.

Obwohl in Fig. 1 ein 3 phasiger Wechselrichter dargestellt ist, ist jedoch auch der Einsatz eines 1 oder 2 phasigen Wechselrichters möglich.

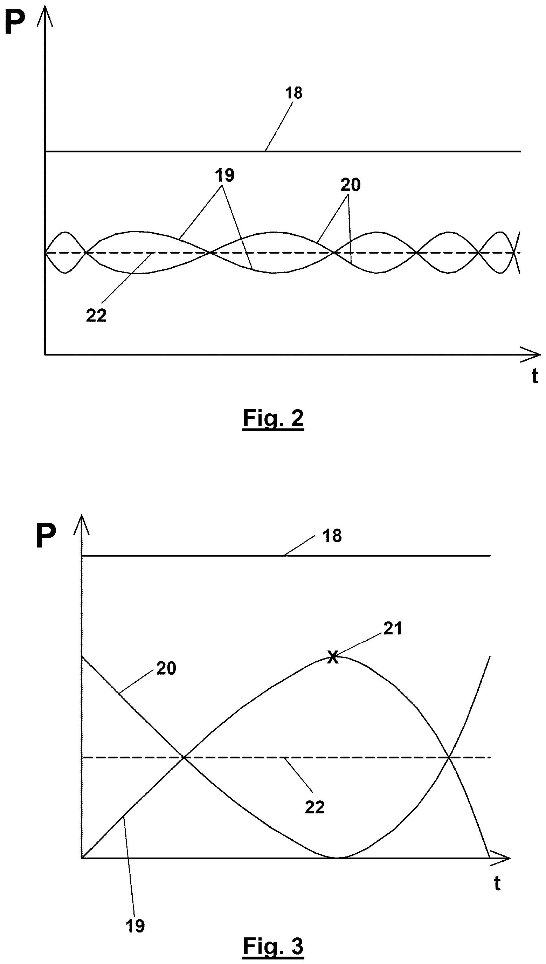

**Fig. 2** illustriert für einen Wechselrichter mit zwei DC/DC-Wandlern und einem gemeinsamen DC/AC-Wandler, wie eine konstante Leistung 18, die von dem DC/AC-Wandler in ein Wechselstromnetz 8 eingespeist wird, dynamisch auf die Leistungen 19 und 20 der beiden DC/DC-Wandler 2 bzw. die darüber an den Gleichspannungszwischenkreis 5 gemäß Fig. 1 angeschlossenen Gleichstromquellen 25 verteilt wird. Eine Variation der Leistung 19 des einen DC/DC-Wandlers wird durch eine gegenläufige Variation der Leistung 20 des anderen DC/DC-Wandlers kompensiert. Dabei erfolgt diese dynamische Kompensation mit einer schnellen Antwortzeit im Bereich unterhalb von 10 ms, vorzugsweise im Bereich von 1 ms und weniger. Damit können trotz der Variation der Leistung 19 des einen DC/DC-Wandlers die Spannung über dem Zwischenkreiskondensator 7 gemäß Fig. 1, die Leistung 18, die von dem DC/AC-Wandler in das Wechselstromnetz 8 eingespeist wird, und damit auch eine mittlere Leistung 22 aller Gleichstromquellen 25 und - hier gleichbedeutend damit - eine mittlere Leistung 22 der an diese angeschlossenen DC/DC Wandler 2 konstant gehalten werden. Unter der mittleren Leistung 22 der Gleichstromquellen 25 ist in diesem Zusammenhang - und im Folgenden - der mittlere Beitrag jeder der insgesamt an den Wechselrichter 1 angeschlossenen Gleichstromquellen 25 zur Leistung 18 des DC/AC-Wandlers 6 zu verstehen. Diese Bedingung gilt insbesondere auch zeitabhängig, d. h. die mittlere Leistung 22 jedes DC/DC-Wandlers 2 ergibt sich zu jedem Zeitpunkt t aus dem Quotient der Leistung 18 des DC/AC-Wandlers 6 und der Anzahl der insgesamt dem Wechselrichter 1 zuzuordnenden DC/DC Wandler 2. Da es sich im vorliegenden Fall um einen Wechselrichter mit insgesamt zwei DC/DC-Wandlern 2 handelt, liegt die mittlere Leistung 22 dieser beiden DC/DC-Wandler 2 auf halber Höhe der Leistung 18 des DC/AC-Wandlers 6.

Im dargestellten Fall liegen die Leistungen 19, 20 des einen und des anderen DC/DC-Wandlers - abgesehen von der erfindungsgemäßen Kompensation - auf dem gleichem Niveau der mittleren Leistung 22. Es ist jedoch auch möglich, dass sich die Leistung 19 des einen und die Leistung 20 des anderen DC/DC-Wandlers 2 auf unterschiedlichen Niveaus befinden. Beispielsweise kann die Leistung 19 des einen DC/DC-Wandlers 2 auch ohne die erfindungsgemäße Kompensation um einem bestimmten Betrag oder Prozentsatz größer als die Leistung 20 des anderen DC/DC-Wandlers 2 sein oder umgekehrt. Wesentlich ist, dass in jedem Fall die Summe der Leistungen aller an den Wechselrichter 1 angeschlossenen Gleichstromquellen 25 der vorgegebenen Leistung 18 des DC/AC-Wandlers 6 entspricht.

**Fig. 3** illustriert Verläufe der Leistung P über der Zeit t bei einem Wechselrichter mit drei DC/DC-Wandlern 2 und einem gemeinsamen DC/AC-Wandler 6 gemäß Fig. 1. Die Leistung 18 des DC/AC-Wandlers 6 ist zeitlich konstant und gegenüber der maximal von an DC/DC-Wandlern verfügbaren Leistung abgeregelt. Die Leistung 19 des einen DC/DC-Wandlers entspricht seiner Kennlinie über seiner Betriebsspannung, die über der Zeit t mit konstanter Rate erhöht wurde. Das heißt, obwohl die DC/DC-Wandler 2 nicht die maximal von den an sie angeschlossenen Strings verfügbaren Leistungen in den gemeinsamen Gleichspannungszwischenkreis 5 einspeisen, werden während der Abregelung der Leistung 18 die MPPs 21 der einzelnen DC/DC-Wandler 2 bzw. der daran angeschlossenen Strings 3 erfasst. Dies kann einmal mit dem Ziel erfolgen, die maximal verfügbare Leistung für die Forderung nach einer Vergütung zu dokumentieren. Ein anderes Ziel kann es sein, die MPPs sofort wieder anfahren zu können, sobald die Abregelung der Leistung 18 beendet ist. Das Überfahren des MPP 21 aus einem Bereich von leerlaufnahen hohen Betriebsspannungen in einen Bereich kurzschlussnaher niedriger Betriebsspannungen kann zudem mit dem Ziel erfolgen, einen String 3, der sich im Rahmen der Abregelung einer Spannungserweiterung, d. h. einer höheren Betriebsspannung als der maximal erlaubten Zwischenkreisspannung über dem Zwischenkreiskondensator 7 des gemeinsamen Gleichspannungszwischenkreises 5, annähert, in einen kurzschlussnäheren Betriebspunkt etwa gleicher Leistung, aber geringerer Betriebsspannung zu überführen. Die dabei im MPP 21 erhöhte Leistung 19 von dem einen DC/DC-Wandler wird durch eine reduzierte Leistung 20 von einem der beiden anderen DC/DC-Wandler 2 kompensiert. Es ist damit keine Unterbrechung der Einspeisung der Leistung 18 erforderlich, die mit einem Einspeiseverlust über die von außen erzwungene Abregelung hinaus verbunden wäre. Der verbleibende andere DC/DC-Wandler 2 weist in diesem Beispiel eine Leistung auf, die gleich der mittleren Leistung 22 ist. Die mittlere Leistung 22 aller DC/DC-Wandler 2 bleibt hier zeitlich konstant, da auch die Leistung 18 des DC/AC-Wandlers 6 im dargestellten Bereich zeitlich konstant ist. Da es sich in diesem Beispiel um einen Multistring-Wechselrichter mit insgesamt drei DC/DC-Wandlern handelt, entspricht die mittlere Leistung 22 der DC/DC-Wandler einem Drittel der Leistung 18 des DC/AC-Wandlers 6. Es ist auch möglich, dass die Leistung 18 des DC/AC-Wandlers einer vorgegebenen, zeitvariablen Sollkurve folgt. Auch in diesem Fall ist wesentlich, dass sich zu jedem Zeitpunkt t die Leistungen aller an den Wechselrichter 1 angeschlossenen Gleichstromquellen 25 zu der vorgegebenen Leistung 18 des DC/AC-Wandlers 6 addieren.

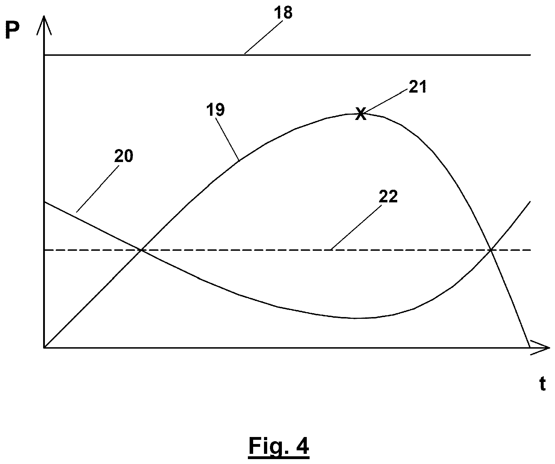

**Fig. 4** illustriert ähnliche Leistungsverläufe wie Fig. 3. Allerdings wird hier die den MPP 21 durchfahrende Leistung 19 des einen DC/DC-Wandlers 2 bzw. der daran angeschlossenen Strings 3 im Gegensatz zur Fig. 3 nicht nur mit einer gegenläufigen Variation der Leistung 20 von einem anderen DC/DC-Wandler 2 kompensiert. Vielmehr wird hier die gegenläufige Variation auf mehrere - hier: zwei - andere DC/DC-Wandler 2 mit entsprechend reduzierten Leistungen 20 aufgeteilt. Die Variation der Leistungen 20 gegenüber einer mittleren Leistung 22 aller DC/DC-Wandler 2 fällt damit nur halb so groß aus wie die Variation der Leistung 19 gegenüber der mittleren Leistung 22. So kann beispielsweise auch dann, wenn alle Strings bereits bei relativ hoher Betriebsspannung arbeiten, die vorübergehende Leistungssteigerung beim Überführen des ersten in den spannungserweiternden Bereich gelangenden Strings zu kurzschlussnahen geringeren Betriebsspannungen von den anderen DC/DC-Wandlern kompensiert werden. Dies ist im Fall eines Wechselrichters 1 mit lediglich zwei DC/DC-Wandlern 2 nur schwer, teilweise aber auch gar nicht möglich, da hier eine Leistungsänderung des einen Strings 3 allein durch eine gegenläufige Leistungsänderung des genau einen anderen Strings 3 kompensiert werden muss. Der Freiheitsgrad für eine aktive Leistungsänderung eines einzelnen DC/DC-Wandlers 2 bzw. der an diesen angeschlossenen Strings 3 steigt daher mit der Anzahl der insgesamt an den Wechselrichter 1 angeschlossenen Gleichstromquellen 25 an. Für den Freiheitsgrad einer dynamischen Leistungsänderung sind dabei die innerhalb des Wechselrichters 1 vorhandenen DC/DC-Wandler 2 entscheidend.

Durch die dynamische Umverteilung der Leistung zwischen den einzelnen DC/DC-Wandlern 2 gemäß Fig. 1 im Rahmen von Such- oder Trackingverfahren kann auch ein Betriebspunkt des gesamten Wechselrichters 1 empirisch bestimmt werden, in dem einem übergeordneten Gesichtspunkt besonders gut Rechnung getragen wird. Hierbei kann es sich beispielsweise um eine minimierte Verlustleistung, eine minimierte Komponentenbelastung oder eine maximierte, d. h. schnelle und dennoch stabile Regelbarkeit aller Leistungen handeln. Ein solcher übergeordneter Gesichtspunkt kann auch die Angleichung der Verlustleistung einzelner DC/DC-Wandler 2 untereinander im Hinblick auf eine gleichmäßige Belastung ihrer Komponenten während des Betriebes sein. Auf diese Weise lassen sich insbesondere die zu erwartenden Lebensdauern einzelner Komponenten in unterschiedlichen DC/DC-Wandlern 2 angleichen. Einem verfrühten Ausfall einzelner Komponenten eines DC/DC-Wandlers im Vergleich zu baugleichen Komponenten eines anderen DC/DC-Wandlers wird somit effektiv vorgebeugt.

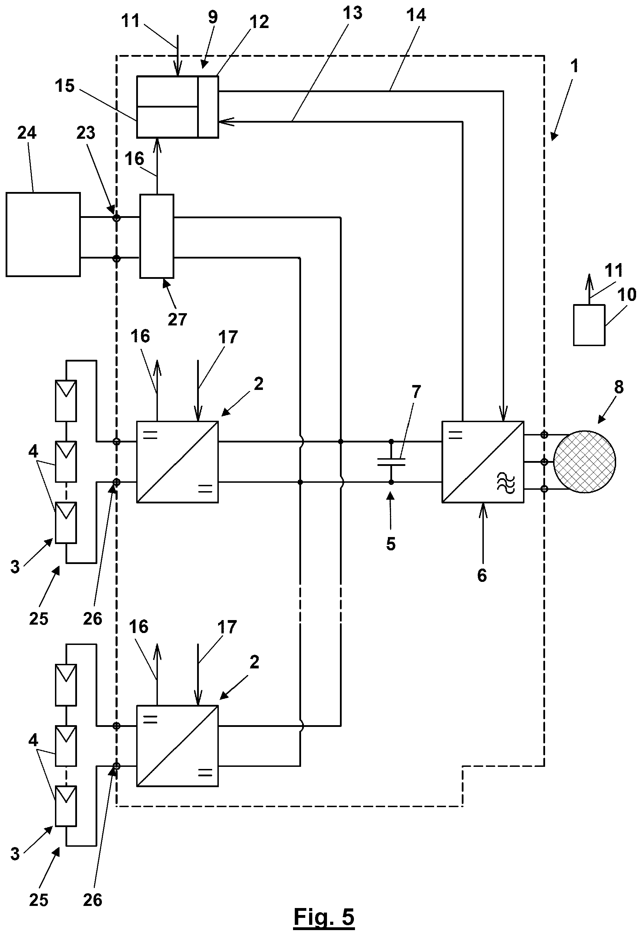

**Fig. 5** zeigt einen Wechselrichter 1, der sich in folgenden Details von dem Wechselrichter 1 gemäß Fig. 1 unterscheidet. Neben den Eingängen 26 mit den ansteuerbaren DC/DC-Wandlern 2 weist der Wechselrichter 1 einen weiteren zweipoligen Eingang 23 auf, über den eine Gleichstromquelle 24 direkt an den gemeinsamen Gleichspannungszwischenkreis 5 angeschlossen ist. Dabei wird in dem Eingang 23 ausschließlich mit einem Stromsensor 27 der von der Gleichstromquelle 24 in den Gleichspannungszwischenkreis 5 fließende Strom erfasst und der Steuereinrichtung 9 als Leistungssignal 16 mitgeteilt. Die konkrete Leistung ergibt sich dabei zusammen mit der Zwischenkreisspannung des Gleichspannungszwischenkreises 5, die in dem Leistungssignal 13 von dem DC/AC-Wandler 6 enthalten ist. Die Gleichstromquelle 24 kann statt eines Photovoltaikgenerators insbesondere einen Generator mit einer elektrischen Maschine aufweisen. Die elektrische Maschine kann dabei z. B. von einer Windturbine oder einem Dieselmotor angetrieben sein. Derartige Gleichstromquellen werden auch als Windkraftanlagen oder Dieselgeneratoren bezeichnet. Eine Gleichstromquelle kann auch einen Wechselstromgenerator aufweisen, dem ein AC/DC-Wandler nachgeschaltet ist. Gleichstromquellen, die einen Generator mit einer elektrischen Maschine aufweisen, sind allein aufgrund des Trägheitsmoments ihres Rotors wenig dynamisch, was auch willentliche Variationen ihrer Leistungen anbelangt, die sie in den Gleichspannungszwischenkreis 5 einspeisen. Sie sind daher als einzige Stromquellen wenig geeignet, wenn die Leistung des DC/AC-Wandlers 6 dynamisch variiert werden soll, um Regelleistung für das Wechselstromnetz 8 bereitzustellen. Diese Dynamik wird bei dem Wechselrichter 1 gemäß Fig. 5 jedoch durch die parallel jeweils mittels eines ansteuerbaren DC/DC-Wandlers 2 an den gemeinsamen Gleichspannungszwischenkreis 5 angeschlossenen Gleichstromquellen 25 in Form von Strings 3 bzw. Photovoltaikgeneratoren erreicht. An den Eingang 23 ohne ansteuerbaren DC/DC-Wandler 2 könnte aber auch ein weiterer Photovoltaikgenerator in Form eines Strings 3 angeschlossen sein. Bei diesem könnte dann trotz des in dem Eingang 23 nicht vorhandenen ansteuerbaren DC/DC-Wandlers 2 ein MPP-Tracking durchgeführt werden. Hierzu wäre die Zwischenkreisspannung, die über den Zwischenkreiskondensator 7 des Gleichspannungszwischenkreises 5 abfällt, durch gezieltes Ansteuern des DC/AC-Wandlers 6 zu variieren. Auch bei jeder anderen Gleichstromquelle 24 kann auf diese Weise deren Betriebspunkt mit dem Wechselrichter 1 gemäß Fig. 5 variiert werden. Jede resultierende Variation der Leistung, die von der Gleichstromquelle 24 in den Gleichspannungszwischenkreis 5 eingespeist wird, wird dynamisch durch Ansteuern der ansteuerbaren DC/DC-Wandler 2 auf komplementäre Leistungsvariationen ausgeglichen.

## BEZUGSZEICHENLISTE

| | |
|---|---|
| 1 | Wechselrichter |
| 2 | DC/DC-Wandler |
| 3 | String |
| 4 | Photovoltaikzelle |
| 5 | Gleichspannungszwischenkreis |
| 6 | DC/AC-Wandler |
| 7 | Zwischenkreiskondensator |
| 8 | Wechselstromnetz |
| 9 | Steuereinrichtung |
| 10 | Betreiber des Wechselstromnetzes 8 |
| 11 | Abregelungssignal |
| 12 | Teilsteuereinrichtung |
| 13 | Leistungssignal |
| 14 | Ansteuersignal |
| 15 | Teilsteuereinrichtung |
| 16 | Leistungssignal |
| 17 | Ansteuersignal |
| 18 | Leistung des DC/AC-Wandlers 6 |
| 19 | Leistung eines DC/DC-Wandlers 2 |
| 20 | Leistung eines anderen DC/DC-Wandlers 2 |
| 21 | MPP des an einen DC/DC-Wandler 2 angeschlossenen Strings 3 |
| 22 | mittlere Leistung |
| 23 | Eingang |
| 24 | Gleichstromquelle |
| 25 | Gleichstromquelle |
| 26 | Eingang |
| 27 | Stromsensor |
| t | Zeit |

P     Leistung

**Patentansprüche**

1. Verfahren zur Leistungsverteilung über mehrere, parallel an einen eingangsseitigen Gleichspannungszwischenkreis (5) eines DC/AC-Wandlers (6) angeschlossene Gleichstromquellen (24, 25), von denen mindestens eine über einen DC/DC-Wandler (2) an den Gleichspannungszwischenkreis (5) angeschlossen ist, wobei der DC/DC-Wandler (2) auf eine Veränderung der von der Gleichstromquelle (25) in den Gleichspannungszwischenkreis (5) eingespeisten Leistung ansteuerbar ist, wobei in einem abgeregelten Betrieb des DC/AC-Wandlers (6), in dem die Leistung des DC/AC-Wandlers (6) gegenüber der Summe der von allen Gleichstromquellen (24, 25) maximal verfügbaren Leistungen abgeregelt wird, die Leistungen der Gleichstromquellen (24, 25) unterschiedlich abgeregelt werden, **dadurch gekennzeichnet, dass** in dem abgeregelten Betrieb des DC/AC-Wandlers (6) durch Ansteuern zumindest des mindestens einen DC/DC-Wandlers (2), über den die mindestens eine Gleichstromquelle (25) an den Gleichspannungszwischenkreis (5) angeschlossen ist, eine Variation der Leistung mindestens einer anderen Gleichstromquelle (24, 25) mit einer Antwortzeit von nicht mehr als 10 ms, vorzugsweise von nicht mehr als 1 ms, des DC/DC-Wandlers (2), über den die mindestens eine Gleichstromquelle (25) an den Gleichspannungszwischenkreis (5) angeschlossen ist, dynamisch kompensiert wird.

2. Verfahren nach Anspruch 1, **dadurch gekennzeichnet, dass** die mindestens eine Gleichstromquelle (25) einen Photovoltaikgenerator aufweist, der über den ansteuerbaren DC/DC-Wandler (2) an den Gleichspannungszwischenkreis (5) des DC/AC-Wandlers (6) angeschlossen ist.

3. Verfahren nach Anspruch 2, **dadurch gekennzeichnet, dass** mehrere Gleichstromquellen (25) jeweils einen Photovoltaikgenerator aufweisen, der über einen ansteuerbaren DC/DC-Wandler (2) an den Gleichspannungszwischenkreis (5) des DC/AC-Wandlers (6) angeschlossen ist.

4. Verfahren nach einem der Ansprüche 1 bis 3, **dadurch gekennzeichnet, dass** die mindestens eine andere Gleichstromquelle (24) einen Generator mit einer elektrischen Maschine aufweist, wobei der Generator insbesondere ohne einen auf eine Veränderung der von der mindestens einen anderen Gleichstromquelle (24) in den Gleichspannungszwischenkreis (5) eingespeisten Leistung ansteuerbaren DC/DC-Wandler (2) an den Gleichspannungszwischenkreis (5) des DC/AC-Wandlers (6) angeschlossen ist.

5. Verfahren nach einem der vorhergehenden Ansprüche, **dadurch gekennzeichnet, dass** die abgeregelte Leistung des DC/AC-Wandlers (6) nach externen Vorgaben und/oder dynamisch geregelt wird.

6. Verfahren nach einem der vorhergehenden Ansprüche, **dadurch gekennzeichnet, dass** die Leistung der mindestens einen anderen Gleichstromquelle (25) aktiv variiert wird, indem ein DC/DC-Wandler (2), über den die mindestens eine andere Gleichstromquelle (25) an den Gleichspannungszwischenkreis (5) angeschlossen ist, angesteuert wird.

7. Verfahren nach einem der Ansprüche 1 bis 5, **dadurch gekennzeichnet, dass** die Leistung der mindestens einen anderen Gleichstromquelle (24) aktiv variiert wird, indem der DC/AC-Wandler (6) auf eine Änderung einer Zwischenkreisspannung seines eingangsseitigen Gleichspannungszwischenkreises (5) angesteuert wird.

8. Verfahren nach Anspruch 6 oder 7, **dadurch gekennzeichnet, dass** die Leistung der mindestens einen anderen Gleichstromquelle (24, 25) aktiv variiert wird, um mindestens einen Teil einer Kennlinie der mindestens einen anderen Gleichstromquelle (24, 25) zu erfassen.

9. Verfahren nach einem der Ansprüche 6 bis 8, **dadurch gekennzeichnet, dass** beim Variieren der Leistung der mindestens einen anderen Gleichstromquelle (24, 25) ein MPP der mindestens einen anderen Gleichstromquelle (24, 25) überfahren wird.

10. Verfahren nach einem der Ansprüche 6 bis 9, **dadurch gekennzeichnet, dass** die Leistung der mindestens einen anderen Gleichstromquelle (24, 25) aktiv variiert wird, um eine Spannungserweiterung der mindestens einen anderen Gleichstromquelle (24, 25) zu erkennen.

11. Verfahren nach einem der Ansprüche 6 bis 10, **dadurch gekennzeichnet, dass** die Leistung der mindestens einen anderen Gleichstromquelle (24, 25) aktiv variiert wird, um die mindestens eine andere Gleichstromquelle (24, 25) von einem leerlaufnahen Betriebspunkt zu einem kurzschlussnahen Betriebspunkt gleicher Leistung, aber geringerer Betriebsspannung zu überführen.

12. Verfahren nach einem der Ansprüche 5 bis 6, **dadurch gekennzeichnet, dass** die Leistung der mindestens einen anderen Gleichstromquelle (24, 25) aktiv variiert wird, um einen unter mindestens einem Gesichtspunkt optimierten Betriebspunkt aller Gleichstromquellen (24, 25) zu ermitteln und anzufahren, wobei der Gesichtspunkt insbesondere ausgewählt ist aus:

- einer minimierten Verlustleistung aller DC/DC-Wandler (2) und des DC/AC-Wandlers (6),
- einer minimierten Beanspruchung aller DC/DC-Wandler (2) und des DC/AC-Wandlers (6),
- einer Angleichung der Verlustleistung baugleicher Komponenten innerhalb mehrerer der DC/DC-Wandler (2),
- einer optimierten Leistungsregelbarkeit des DC/AC-Wandlers (6).

13. Wechselrichter (1) mit

- einem einen eingangsseitigen Gleichspannungszwischenkreis (5) aufweisenden DC/AC-Wandler (6),
- mit mehreren Eingängen (23, 26) für einen parallelen Anschluss von mehreren Gleichstromquellen (24, 25) an den Gleichspannungszwischenkreis (5),
- mit mindestens einem, zwischen einem der Eingänge (26) und dem Gleichspannungszwischenkreis (5) angeordneten DC/DC-Wandler (2), der auf eine Veränderung der über ihn in den Gleichspannungszwischenkreis (5) eingespeisten Leistung ansteuerbar ist, **gekennzeichnet durch** eine
- Steuereinrichtung (9), die den mindestens einen DC/DC-Wandler (2) gemäß dem Verfahren nach einem der Ansprüche 1 bis 12 ansteuert.

14. Wechselrichter (1) nach Anspruch 13, **dadurch gekennzeichnet, dass** die Steuereinrichtung (9) eine primäre Teilsteuereinrichtung (12), die die Leistung des DC/AC-Wandlers (6) regelt, und eine sekundäre Teilsteuereinrichtung (15) aufweist, die diese Leistung unter Ansteuerung des mindestens einen DC/DC-Wandlers (2) über die Eingänge (23, 26) verteilt.

15. Wechselrichter (1) nach Anspruch 13 oder 14, **dadurch gekennzeichnet, dass** zwischen allen Eingängen (26) und dem Gleichspannungszwischenkreis (5) ansteuerbare DC/DC-Wandler (2) vorgesehen sind oder dass in mindestens einem der Eingänge (23) kein ansteuerbarer DC/DC-Wandler (2) vorgesehen ist.

**Claims**

1. A method for distributing power among a plurality of DC sources (24, 25) connected in parallel to an input-side DC link (5) of a DC/AC converter (6), of which DC sources at least one is connected, via a DC/DC converter (2), to the DC link (5), wherein the DC/DC converter (2) is actuable in order to cause a change in the power fed from the DC source (25) into the DC link (5), wherein, during a derated operation of the DC/AC converter (6), in which the power of the DC/AC converter (6) is derated with respect to the sum of the maximum powers available from all DC sources (24, 25), the powers of the DC sources (24, 25) are derated differently, **characterized in that**, during the derated operation of the DC/AC converter (6), a variation in the power of at least one other DC source (24, 25) is dynamically compensated for by actuation of at least the at least one DC/DC converter (2) via which the at least one DC source (25) is connected to the DC link (5) with a response time of the DC/DC converter (2) via which the at least one DC source (25) is connected to the DC link (5) of no more than 10 ms, preferably no more than 1 ms.

2. The method as claimed in claim 1, **characterized in that** the at least one DC source (25) comprises a photovoltaic generator, which is connected to the DC link (5) of the DC/AC converter (6) via the actuable DC/DC converter (2).

3. The method as claimed in claim 2, **characterized in that** multiple DC sources (25) each comprise a photovoltaic generator connected to the DC link (5) of the DC/AC converter (6) via an actuable DC/DC converter (2).

4. The method as claimed in one of claims 1 to 3, **characterized in that** the at least one other DC source (24) comprises a generator with an electric machine, wherein the generator particularly is connected to the DC link (5) of the DC/AC converter (6) without a DC/DC converter (2) which is actuable in order to cause a change in the power fed into the DC link (5) by the at least one other DC source (24).

5. The method as claimed in one of the preceding claims, **characterized in that** the power of the DC/AC converter (6) is derated in accordance with external presets and or is controlled dynamically.

6. The method as claimed in one of the preceding claims, **characterized in that** the power of the at least one other DC source (25) is varied actively by actuating a DC/DC converter (2) via which the at least one other DC source (25) is connected to the DC link (5).

7. The method as claimed in one of claims 1 to 5, **characterized in that** the power of the at least one other DC source (24) is varied actively by actuating the DC/AC converter (6) in order to cause a change in a DC-link voltage of its input-side DC link (5).

**8.** The method as claimed in claim 6 or 7, **characterized in that** the power of the at least one other DC source (24, 25) is varied actively in order to determine at least a part of a characteristic of the at least one other DC source (24, 25).

**9.** The method as claimed in one of claims 6 to 8, **characterized in that**, during the variation of the power of the at least one other DC source (24, 25), an MPP of the at least one other DC source (24, 25) is passed through.

**10.** The method as claimed in one of claims 6 to 9, **characterized in that** the power of the at least one other DC source (24, 25) is varied actively in order to identify a voltage extension of the at least one other DC source (24, 25).

**11.** The method as claimed in one of claims 6 to 10, **characterized in that** the power of the at least one other DC source (24, 25) is varied actively in order to transfer the at least one other DC source (24, 25) from an operating point close to open-circuit to an operating point close to short-circuit of the same power, but a lower operating voltage.

**12.** The method as claimed in one of claims 5 to 6, **characterized in that** the power of the at least one other DC source (24, 25) is varied actively in order to determine and approach an operating point of all of the DC sources (24, 25) which is optimized from at least one point of view, wherein the point of view particularly is selected from the following:

 - a minimized power loss of all of the DC/DC converters (2) and the DC/AC converter (6),
 - a minimized stress of all of the DC/DC converters (2) and the DC/AC converter (6),
 - a matching of the power losses of components with an identical design within a plurality of the DC/DC converters (2),
 - an optimized power control capacity of the DC/AC converter (6).

**13.** An inverter (1) with

 - a DC/AC converter (6) comprising an input-side DC link (5),
 - with multiple inputs (23, 26) for a parallel connection of a plurality of DC sources (24, 25) to the DC link (5),
 - with at least one DC/DC converter (2) arranged between one of the inputs (26) and the DC link (5) and actuable in order to cause a change in the power fed via said DC/DC converter (2) into the DC link (5), **characterized by**
 - a control device (9) actuating the at least one DC/DC converter (2) in accordance with the method as claimed in one of claims 1 to 12.

**14.** The inverter (1) as claimed in claim 13, **characterized in that** the control device (9) comprises a primary control device element (12) controlling the power of the DC/AC converter (6), and further comprises a secondary control device element (15) distributing this power among the inputs (23, 26) by actuation of the at least one DC/DC converter (2).

**15.** The inverter (1) as claimed in claim 13 or 14, **characterized in that** actuable DC/DC converters (2) are provided between all of the inputs (26) and the DC link (5), or **in that** no actuable DC/DC converter (2) is provided in at least one of the inputs (23).

## Revendications

**1.** Procédé de distribution de puissance sur plusieurs sources de courant continu (24, 25) branchées en parallèle à un circuit intermédiaire à tension continue (5) du côté de l'entrée d'un convertisseur CC/CA (6), parmi lesquelles au moins l'une est raccordée au circuit intermédiaire à tension continue (5) par le biais d'un convertisseur CC/CC (2), le convertisseur CC/CC (2) pouvant être commandé sur une modification de la puissance injectée par la source de tension continue (25) dans le circuit intermédiaire à tension continue (5), procédé selon lequel, dans un fonctionnement à régulation de limitation du convertisseur CC/CA (6), dans lequel la puissance du convertisseur CC/CA (6) est limitée par régulation par rapport à la somme du maximum de puissances pouvant être délivrées par toutes les sources de courant continu (24, 25), les puissances des sources de courant continu (24, 25) sont limitées par régulation à des valeurs différentes, **caractérisé en ce que** dans le fonctionnement à régulation de limitation du convertisseur CC/CA (6), la commande au moins de l'au moins un convertisseur CC/CC (2) par le biais duquel l'au moins une source de courant continu (25) est raccordée au circuit intermédiaire à tension continue (5), une modification de la puissance d'au moins une autre source de courant continu (24, 25) est compensée dynamiquement avec un temps de réponse maximal de 10 ms, de préférence maximal de 1 ms, du convertisseur CC/CC (2) par le biais duquel l'au moins une source de courant continu (25) est raccordée au circuit intermédiaire à tension continue (5).

**2.** Procédé selon la revendication 1, **caractérisé en ce que** l'au moins une source de courant continu (25) possède un générateur photovoltaïque qui est raccordé au circuit intermédiaire à tension continue (5) du convertisseur CC/CA (6) par le biais du convertisseur CC/CC (2) commandable.

**3.** Procédé selon la revendication 2, **caractérisé en ce que** plusieurs sources de courant continu (25) possèdent respectivement un générateur photovoltaïque qui est raccordé au circuit intermédiaire à tension continue (5) du convertisseur CC/CA (6) par le biais d'un convertisseur CC/CC (2) commandable.

**4.** Procédé selon l'une des revendications 1 à 3, **caractérisé en ce que** l'au moins une autre source de courant continu (24) possède un générateur pourvu d'une machine électrique, le générateur étant notamment raccordé au circuit intermédiaire à tension continue (5) du convertisseur CC/CA (6) sans un convertisseur CC/CC (2) pouvant être commandé sur une modification de la puissance injectée par l'au moins une autre source de tension continue (24) dans le circuit intermédiaire à tension continue (5).

**5.** Procédé selon l'une des revendications précédentes, **caractérisé en ce que** la puissance limitée par régulation du convertisseur CC/CA (6) est régulée selon les indications externes et/ou de manière dynamique.

**6.** Procédé selon l'une des revendications précédentes, **caractérisé en ce que** la puissance de l'au moins une autre source de tension continue (25) est mise à varier activement en commandant un convertisseur CC/CC (2) par le biais duquel l'au moins une autre source de tension continue (25) est raccordée au circuit intermédiaire à tension continue (5).

**7.** Procédé selon l'une des revendications 1 à 5, **caractérisé en ce que** la puissance de l'au moins une autre source de tension continue (24) est mise à varier activement en commandant le convertisseur CC/CA (6) sur une variation d'une tension de circuit intermédiaire de son circuit intermédiaire à tension continue (5) du côté de l'entrée.

**8.** Procédé selon la revendication 6 ou 7, **caractérisé en ce que** la puissance de l'au moins une autre source de tension continue (24, 25) est mise à varier activement afin de détecter au moins une partie d'une courbe caractéristique de l'au moins une autre source de tension continue (24, 25).

**9.** Procédé selon l'une des revendications 6 à 8, **caractérisé en ce que** lors de la variation de la puissance de l'au moins une autre source de tension continue (24, 25), un MPP (Point de puissance maximale) de l'au moins une autre source de tension continue (24, 25) est franchi.

**10.** Procédé selon l'une des revendications 6 à 9, **caractérisé en ce que** la puissance de l'au moins une autre source de tension continue (24, 25) est mise à varier activement afin de détecter une extension de la tension de l'au moins une autre source de tension continue (24, 25).

**11.** Procédé selon l'une des revendications 6 à 10, **caractérisé en ce que** la puissance de l'au moins une autre source de tension continue (24, 25) est mise à varier activement afin de faire passer l'au moins une autre source de tension continue (24, 25) d'un point de fonctionnement proche du fonctionnement à vide à un point de fonctionnement proche du court-circuit de même puissance, mais à la tension de service plus faible.

**12.** Procédé selon l'une des revendications 5 à 6, **caractérisé en ce que** la puissance de l'au moins une autre source de tension continue (24, 25) est mise à varier activement afin de déterminer un point de fonctionnement de toutes les sources de tension continue (24, 25) qui est optimisé d'au moins un point de vue et de le gagner, le point de vue étant notamment choisi parmi les suivants :

    - une perte de puissance réduite au minimum de tous les convertisseurs CC/CC (2) et du convertisseur CC/CA (6),
    - une sollicitation réduite au minimum de tous les convertisseurs CC/CC (2) et du convertisseur CC/CA (6),
    - un équilibrage de la perte de puissance des composants de structure identique au sein de plusieurs des convertisseurs CC/CC (2),
    - une aptitude optimisée à la régulation de la puissance du convertisseur CC/CA (6).

**13.** Onduleur (1), comprenant

    - un convertisseur CC/CA (6) qui possède, du côté de son entrée, un circuit intermédiaire à tension continue (5),
    - comprenant plusieurs entrées (23, 26) pour un branchement en parallèle de plusieurs sources de courant continu (24, 25) au circuit intermédiaire à tension continue (5),
    - comprenant au moins un convertisseur CC/CC (2) disposé entre l'une des entrées (26) et le circuit intermédiaire à tension continue (5), lequel peut être commandé sur une modification de la puissance injectée par le biais de lui-même dans le circuit intermédiaire à tension continue (5),

**caractérisé par** un

    - dispositif de commande (9) qui commande l'au moins un convertisseur CC/CC (2) conformément au procédé selon l'une des revendications 1 à 12.

**14.** Onduleur (1) selon la revendication 13, **caractérisé en ce que** le dispositif de commande (9) possède un dispositif de commande partiel primaire (12), lequel régule la puissance du convertisseur CC/CA (6), et un dispositif de commande partiel secondaire (15), lequel distribue cette puissance par le biais des entrées (23, 26) en commandant l'au moins un convertisseur CC/CC (2).

**15.** Onduleur (1) selon la revendication 13 ou 14, **caractérisé en ce que** des convertisseurs CC/CC (2) commandables sont présents entre toutes les entrées (26) et le circuit intermédiaire à tension continue (5) ou **en ce qu'**aucun convertisseur CC/CC (2) commandable n'est présent dans au moins l'une des entrées (23).

<u>Fig. 1</u>

P

18

19 20

22

t

**Fig. 2**

P

18

21

20

22

19

t

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110101784 A1
- EP 2284382 A2
- EP 2104200 A1
- WO 2012017068 A2
- DE 10044096 A1
- US 20100133904 A1